# EUROPÄISCHE PATENTSCHRIFT

(11) **EP 0 896 904 B1**
(45) Veröffentlichungstag und Bekanntmachung des Hinweises auf die Patenterteilung: **19.11.2003**
(21) Anmeldenummer: 98112708.7
(22) Anmeldetag: 09.07.1998
(51) Int. Cl.: B60R 16/02

(54) **Verkabelungsmodul**
Cabling module
Module de cablage

(30) Priorität: 13.08.1997 DE 19734971
(43) Veröffentlichungstag der Anmeldung: 17.02.1999
(73) Patentinhaber: Volkswagen Aktiengesellschaft, 38436 Wolfsburg (DE)
(72) Erfinder: Vargas, Julio, César, 38124 Braunschweig (DE); Stoppel, Klaus-Dieter, 38444 Wolfsburg (DE)

(56) Entgegenhaltungen:
- DE-A- 3 435 566
- DE-A- 3 535 382
- DE-A- 3 935 628
- FR-A- 2 742 587
- US-A- 3 529 795
- US-A- 5 407 371
- US-A- 5 626 483

## Beschreibung

Die Erfindung betrifft ein Verkabelungsmodul mit einer Verkabelungsleiste, und an der Verkabelungsleiste angeordneten elektrischen Leitungen, und einem Zentralstecker mit dem zumindest einige der elektrischen Leitungen elektrisch verbindbar sind gemäß dem Oberbegriff des Anspruchs 1. Ein derartiges Modul ist aus der DE 34 35 566 A bekannt.

Aus der Deutschen Offenlegungsschrift DE 40 13 537 ist eine Kontaktierungsleiste zur gemeinsamen elektrischen Kontaktierung mehrerer elektrisch betätigbarer Aggregate von Brennkraftmaschinen, insbesondere von Brennstoffeinspritzventilen, beschrieben. In der dort beschriebenen Kontaktierungsleiste sind einerseits in einem Trägerteil und andererseits in einem Deckelteil elektrische Leiter eingelassen. Bei der Montage des Deckelteils auf dem Trägerteil wird dann der elektrische Kontakt hergestellt.

Zum einen setzt diese Lösung voraus, daß die elektrischen Leiter in ein Trägerteil derart integrierbar sind, daß sie durch einfaches Montieren des Deckelteils kontaktiert werden können. Sind die elektrisch betätigbaren Aggregate beispielsweise in der Mitte eines Bauteils angeordnet, so müßten in diesem Fall gesonderte Leitungen an den Rand des Bauteils geführt werden.

Besonders nachteilig bei einer Kontaktierungsleiste der obengenannten Art ist, daß auftretende Relativbewegungen zwischen dem Trägerteil und dem Deckelteil die Kontaktierung beeinträchtigen können.

Ein weiterer Nachteil der obengenannten Lösung ist, daß die Kontaktierung blind erfolgt, d. h., daß die Kontaktierung nach erfolgter Montage optisch nicht überprüft werden kann. Bei Auftreten von Fehlern ist deren Ortung somit problematisch.

Femer ist die Anordnung der elektrischen Leitungen in dem Trägerteil bzw. Deckelteil verhältnismäßig teuer.

Aufgabe der Erfindung ist es ein Verkabelungsmodul der eingangs genannten Art derart zu verbessern, daß eine möglichst einfache und montagefreundliche elektrische Kontaktierung auch von schwer zugänglichen elektrisch betätigbaren Aggregaten ermöglicht wird.

Die Aufgabe wird bei einem eingangs genannten Verkabelungsmodul erfindungsgemäß durch die kennzeichnenden Merkmale des Patentanspruchs 1 gelöst. Vorteilhafte Aus- und Weiterbildungen sind in den Unteransprüchen gegeben.

Erfindungsgemäß wird vorgeschlagen, daß Mittel vorgesehen sind, mit denen die Leitungen an der Verkabelungsleiste haltbar sind und ein oder mehrere elektrische Leitungen von der Verkabelungsleiste abzweigen und weitere Mittel vorgesehen sind, mit denen die abzweigenden Leitungen an der Verkabelungsleiste haltbar sind.

Mit der erfindungsgemäßen Lösung wird ein kompaktes Verkabelungsmodul geschaffen, welches als Zusammenbauteil in eine Öffnung eines Bauteils eingeschoben werden kann. Nach dem Einschieben können dann die einzelnen elektrisch betätigbaren Aggregate mit den abzweigenden Leitungen kontaktiert werden.

Die Verkabelungsleiste ist formstabil ausgebildet. Dadurch wird es ermöglicht die an der Verkabelungsleiste gehaltenen, in sich beweglichen elektrischen Leitungen in einer vorgegebenen Einbauposition zu montieren. Handelt es sich bei den elektrisch betätigbaren Aggregaten z. B. um Magnetventile, die z. B. Pumpe Düseelementen in einem Zylinderkopf einer Brennkraftmaschine nachgeschaltet sind, so kann das Verkabelungsmodul durch eine Öffnung der Zylinderkopfwand eingeschoben werden.

Vorteilhafterweise weist die Verkabelungsleiste Mittel auf, mit denen die Verkabelungsleiste an dem Bauteil haltbar ist. Dies können z. B. Federmittel sein mit denen die Verkabelungsleiste in Öffnungen von Gehäusestegen innerhalb des Bauteils befestigbar ist. Nach dem Einschieben des Verkabelungsmoduls werden die elektrisch betätigbaren Aggregate dann mit den abzweigenden Leitungen kontaktiert. Dies ist einfach möglich, da der Zylinderkopf von der Oberseite frei zugänglich ist. Durch die erfindungsgemäße Lösung können auch innerhalb eines Bauteils angeordnete elektrisch betätigbare Aggregate elektrisch kontaktiert werden, da die Kontaktierung mittels der abzweigenden Leitungen durch die Wahl der Länge der Leitungen individuell an die Lage der elektrisch betätigbaren Aggregate anpaßbar ist.

Weiterhin wird vorgeschlagen, daß die abzweigenden Leitungen Stecker aufweisen und die Stecker an dem Verkabelungsmodul haltbar sind. Stecker sind aufgrund ihrer zweckmäßigen Bestimmung bereits derart ausgebildet, daß sie an einem Gegenkontakt gesteckt werden können oder an einem Gegenstück befestigt werden können. Dies kann z. B. in einer entsprechenden Ausbildung des Steckkontaktgehäuses oder des Steckkontaktes selber liegen. Die Verkabelungsleiste weist dann vorzugsweise Mittel auf, wie z. B. eine als Gegenkontakt ausgebildete Halterung mit denen die Steckkontakte und damit mittelbar die elektrischen Leitungen an der Verkabelungsleiste haltbar sind.

Die abzweigenden Leitungen sind z. B. eine Stromversorgungsleitung und eine Masseleitung für das elektrisch betätigbare Aggregat. Die Stromversorgungsleitungen verlaufen dann vorteilhafterweise von dem einen Ende der Verkabelungsleiste zu jeweils einem Steckkontakt, von dem dann wiederum eine Masseleitung zu dem jeweils anderen Ende der Verkabelungsleiste verläuft. Auf diese Weise ist entlang der Verkabelungsleiste immer eine konstante Anzahl von elektrischen Leitungen vorhanden. Die Verkabelungsleiste kann dadurch einen konstanten Querschnitt aufweisen, in dem die elektrischen Leitungen angeordnet sind, und wird räumlich optimal ausgenutzt.

Eine einfache Möglichkeit, den Stromkreis zu schließen, besteht darin, die Masseleitungen an dem von der Kontaktbuchse abgewandten Ende der Verkabelungsleiste elektrisch mit einer Masseleitung zu verbinden, wobei diese Masseleitung wiederum elektrisch mit dem Zentralstecker verbunden ist. Auf diese Weise wird eine einfach aufgebaute Stromführung über die gesamte Verkabelungsleiste bei konstanter Anzahl von elektrischen Leitungen geschaffen, wobei die Masseleitung sowie die Stromversorgungsleitung in den Zentralstecker münden. Für die Verkabelung von den elektrisch betätigbaren Aggregaten in dem Zylinderkopf ist somit nur ein Zentralstecker und somit nur eine Öffnung in dem Zylinderkopf erforderlich.

Die Verkabelungsleiste ist vorteilhafterweise U-förmig oder L-förmig ausgebildet, wobei die offene Seite mit Mitteln verschließbar ist. Die elektrischen Kabel sind dadurch in ihrer Lage fest definiert sowie vor Beschädigungen geschützt. Die Mittel können beispielsweise eine an dem einen Schenkel der U-förmigen Verkabelungsleiste angeordnete Verlängerung sein, wobei zwischen der Verlängerung und dem Schenkel eine Materialschwächung vorgesehen ist. Die Verlängerung ist dann durch die Materialschwächung zu dem Schenkel bewegbar, wobei dann durch Verbinden der Verlängerung mit dem jeweils anderen Schenkel die offene Seite der U-förmigen Verkabelungsleiste verschließbar ist. Die Verlängerung kann so auf besonders einfache Art und Weise beim Spritzvorgang der Verkabelungsleiste mit angespritzt werden, wobei die Bewegbarkeit dann durch die Materialschwächung gezielt herbeigeführt ist. Die Materialschwächung kann beispielsweise in einer Verdünnung bestehen.

Weiterhin wird vorgeschlagen, daß die Stecker aus einem Steckergehäuse und einem Steckkontakt bestehen, und daß die Verkabelungsleiste und/oder die Steckergehäuse und/oder der Zentralstecker im wesentlichen aus einem temperaturbeständigen und gegenüber dem Schmiermittel und möglicherweise eindringendem Kraftstoff chemisch resistenten Werkstoff, vorzugsweise aus PA 46, besteht. Dies ist besonders vorteilhaft wenn anorganische oder organische Öle als Schmiermittel verwendet werden oder Alkohol,Diesel oder Rapsöl als Brennstoff verwendet wird, da derartige Schmierstoffe bzw. Brennstoffe chemisch sehr aggressiv sind.

Durch die Verwendung von PA 46 sind die Teile über die gesamte Lebensdauer chemisch, mechanisch sowie thermisch gegenüber den auf sie einwirkenden Belastungen beständig.

Die elektrischen Leitungen und/oder die Steckkontakte und/oder der Zentralstecker sind im elektrischen Kontaktbereich vorteilhafterweise aus Neusilber vorzugsweise aus CuNi 12 Zn 24 oder aus CuNi 18 Zn 20, oder aus Gold ausgebildet oder weisen Beschichtungen mit den genannten Materialien auf. Wird das Verkabelungsmodul beispielsweise in einem Zylinderkopf eingesetzt, so ist der Zylinderkopf von außen im zusammengebauten Zustand schwer zugänglich, so daß eine sichere Kontaktierung von besonderer Bedeutung ist. Mit den obengenannten Maßnahmen wird eine sichere Steckkontaktierung auch in einem Schmiermittel gefüllten Raum bei höheren Temperaturen und auftretenden Erschütterungen geschaffen.

Die Erfindung wird nachfolgend anhand eines Ausführungsbeispiels näher erläutert. Die Zeichnungen zeigen:
- Figur 1:: Verkabelungsmodul mit angedeuteter Verkabelungsleiste und abzweigenden elektrischen Leitungen.
- Figur 2:: Verkabelungsmodul mit Verkabelungsleiste und daran gehaltenen elektrischen Steckkontakten.
- Figur 3:: U-förmige Verkabelungsleiste im Querschnitt mit darin angeordneten elektrischen Leitungen und
- Figur 4:: Stecker mit Steckergehäuse und Steckkontakt
- Figur 5:: Zylinderkopf mit Verkabelungsmodul.

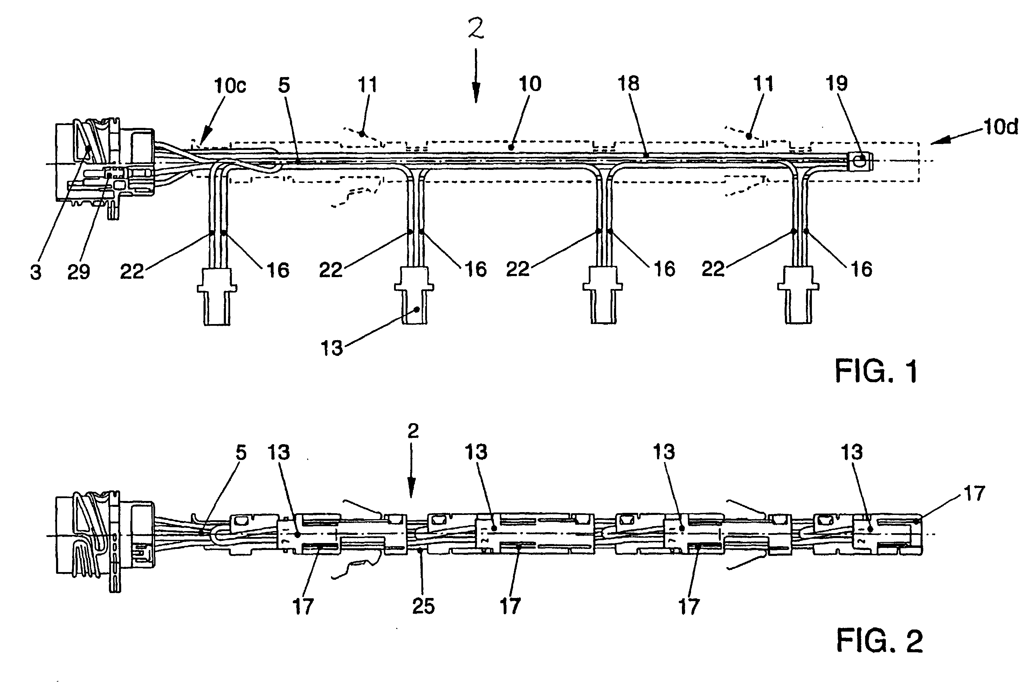

In Figur 1 ist das Verkabelungsmodul 2 mit den elektrischen Leitungen 5, der angedeuteten Verkabelungsleiste 10 und dem Zentralstecker 3 zu erkennen. Von dem Zentralstecker 3 führen die Stromversorgungsleitungen 22 zu den Steckern 13. Von den Steckern 13 führen dann die Masseleitungen 16 zu dem Ende 10d der Verkabelungsleiste 10. Von dem Ende 10d führt dann die Masseleitung 18 zurück zu dem Ende 10c der Verkabelungsleiste 10. Die Masseleitungen 16 und 18 sind an ihrem dem Ende 10b der Verkabelungsleiste 10 zugewandten Ende abisoliert und mit einem Parallelverbinder 19 elektrisch verbunden. An dem Ende 10c der Verkabelungsleiste 10 sind die Masseleitung 18 sowie die Stromversorgungsleitungen 16 elektrisch mit in dem Zentralstecker 3 angeordneten elektrischen Kontakten 29 verbunden. Beispielhaft sind in der Figur 1 vier Stecker 13 vorgesehen. Über die gesamte Länge des Verkabelungsmoduls 2 verlaufen immer fünf elektrische Leitungen 5 parallel, da jede abzweigende Stromversorgungsleitung 22 durch eine in die Verkabelungsleiste 10 zurückgeführte Masseleitung 16 ersetzt wird. Eine Anhäufung von Masseleitungen, die sich beispielsweise ergeben würde, wenn die Masseleitungen 16 zurück zu dem Ende 10c geführt werden würden, wird somit vermieden.

In Figur 2 ist das Verkabelungsmodul 2 im zusammengesteckten Zustand zu erkennen. Die Stecker 13 sind mit den Mitteln 17 an der Verkabelungsleiste 10 gehalten. Dadurch ergibt sich eine kompakte Bauweise, die es ermöglicht, die Verkabelungsleiste 10 mit den Steckern 13 und den elektrischen Leitungen 5 gemeinsam in eine Öffnung 9 eines Bauteils 1 einzuführen.

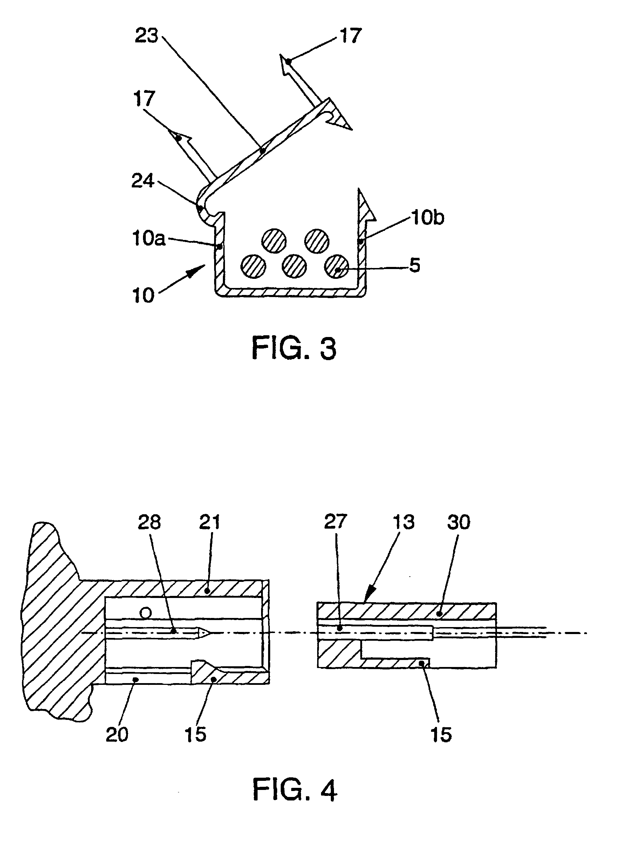

In Figur 3 ist ein Querschnitt der Verkabelungsleiste 10 mit den darin angeordneten elektrischen Leitungen 5 zu erkennen. Die Verkabelungsleiste 10 ist U-förmig ausgebildet und weist die Schenkel 10a und 10b auf. An dem Schenkel 10a ist das Mittel 23 in diesem Fall eine Verlängerung des Schenkels 10a vorgesehen. Zwischen der Verlängerung 23 und dem Schenkel 10a ist eine Materialschwächung 24 zu erkennen. Die Materialschwächung 24 kann beispielsweise in einer Verdünnung oder in Materiallücken bestehen. Die Verlängerung 23 ist dann in der Materialschwächung 24 zu dem Schenkel 10a winklig bewegbar. Durch Herunterklappen der Verlängerung 23 und Verbinden mit dem Schenkel 10b kann die offene Seite der U-förmigen Verkabelungsleiste 10 verschlossen werden. Das Verbinden der Verlängerung 23 mit dem Schenkel 10b kann auf besonders einfache Art und Weise mittels einer Verrastung erfolgen. An der Oberseite der Verlängerung 23 sind die Mittel 17 angeordnet, dies können z. B. federnd ausgebildete Befestigungsansätze sein, zwischen denen die Steckkontakte 13 klemmartig haltbar sind. Die Masseleitungen 16 sowie die Stromversorgungsleitungen 22 mit den daran angeordneten Steckern 13 werden dann durch Freiräume zwischen den Verlängerungen 23 aus der U-förmigen Verkabelungsleiste 10 herausgeführt und an der Oberseite der Verlängerung 23 zwischen den Befestigungsansätzen 17 gehalten. Dadurch wird die Eigenschaft der Stecker 13 eine bestimmte Beschaffenheit aufzuweisen, die zur Steckung an den elektrisch betätigbaren Aggregaten erforderlich ist, auch hier zur Befestigung der Steckkontakte 13 an der Verkabelungsleiste 10 ausgenutzt. In Figur 4 ist der Stecker 13 zu erkennen. Der Stecker 13 besteht aus dem Steckergehäuse 30 und dem Steckkontakt 27. Der Stecker 13 ist in die Steckeraufnahme 21 einführbar und dort mit einem Sicherungsmittel wie z.B. einer Verrastung befestigbar. Die Verrastung erfolgt dadurch, daß die Kante des Steckergehäuses 30 beim Einführen in die Steckeraufnahme 21 hinter der Rastkante 15 einrastet. Der Steckkontakt 27 sowie der in diesen Kontakt einführbare Kontakt 28 sind vorteilhafterweise aus Neusilber vorzugsweise CuNi 12 Zn 24 oder CuNi 18 Zn 20 oder aus Gold hergestellt bzw. weisen eine Beschichtung aus einer der Materialien auf.

Der Zentralstecker 3 und/oder das Steckerhäuse 30 und/oder die Verkabelungsleiste 10 sind aus PA 46. PA 46 ist ein Werkstoff der gegenüber herkömmlichen Schmiermitteln wie Mineralölen, als auch gegenüber organischen Schmiermitteln wie Rapsölen z.B. chemisch resistent ist und auch gegenüber den im Zylinderkopf 1 auftretenden mechanischen und thermischen Beanspruchungen ausreichend über die gesamte Lebensdauer des Verkabelungsmoduls 2 beständig ist. Das Material der Isolierung der elektrischen Leitungen 5; 16; 18; 22 ist z.B ETFE oder weist Teflonbestandteile auf, wodurch dieses gegenüber dem Schmiermittel, wie einem Mineralöl oder einem organischen Öl, chemisch resistent und auch gegenüber den auftretenden thermischen Beanspruchungen beständig ist.

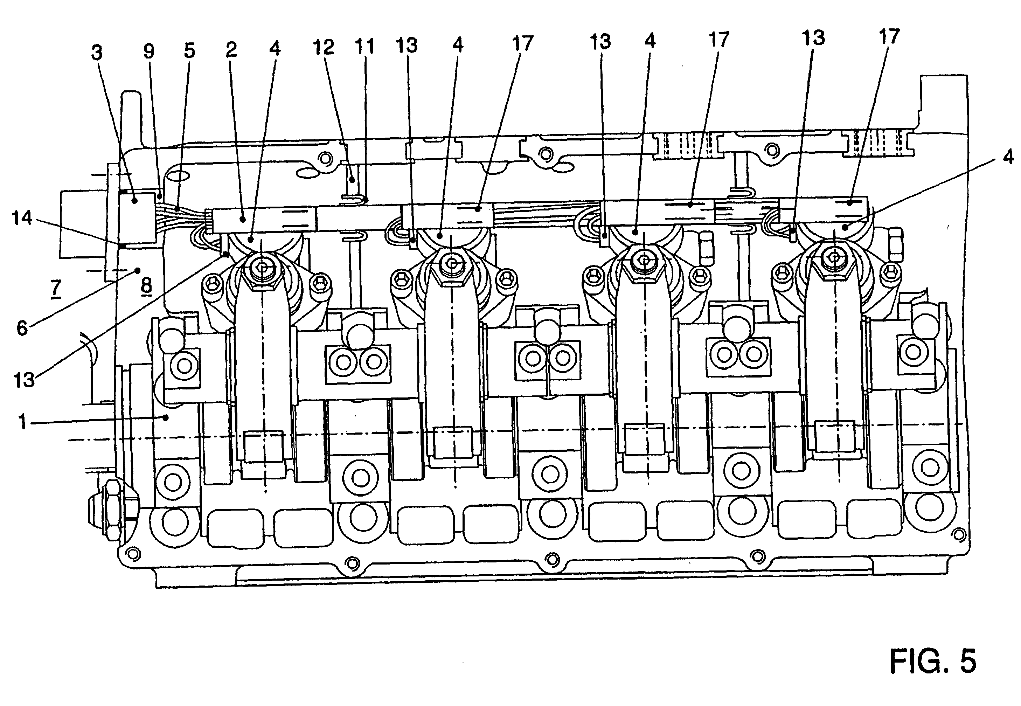

In Figur 5 ist das Verkabelungsmodul 2 angeordnet in einem Bauteil 1, z. B. einem Zylinderkopf, zu erkennen. Der Zylinderkopf 1 ist zumindest teilweise mit Schmiermittel gefüllt. Weiterhin können in dem Schmiermittel auch geringe Mengen Kraftstoff sowie Kraftstoffzusätze enthalten sein. Das Verkabelungsmodul 2 wird in dem in Fig. 2 dargestellten zusammengesteckten Zustand durch die Öffnung 9 der Gehäusewand 6 eingeführt und mit Mitteln 11 wie z. B. Federelementen in Öffnungen in innerhalb des Zylinderkopfes 1 vorgesehenen Gehäusewänden 12 gehalten. Nach dem Einführen des Verkabelungsmoduls 2 wird der Zentralstecker 3 beispielsweise mittels Schraubverbindungen an der Gehäusewand 6 befestigt. Zwischen dem Zentralstecker 3 und der Gehäusewand 6 ist eine mit Dichtlippen versehene Radialdichtung 14 vorgesehen, durch die der Austritt von Schmiermittel aus dem mit Schmiermittel gefüllten Raum 8 in den schmiermittelfreien Raum 7 verhindert wird, bzw. in umgekehrter Richtung der Eintritt von das Schmiermittel verdünnenden oder verschmutzenden Mitteln wie z.B. Wasser in den mit Schmiermittel gefüllten Raum verhindert wird. Nach dem Einführen des Verkabelungsmoduls 2 kann die elektrische Kontaktierung durch den nach oben hin geöffneten Zylinderkopf 1 erfolgen. Die Stecker 13 werden dann in die den elektrisch betätigbaren Aggregaten 4 zugeordneten Steckkontaktaufnahmen 21 gesteckt wodurch eine elektrische Verbindung zwischen den Kontakten 29 in dem Zentralstecker 3 und den elektrisch betätigbaren Aggregaten hergestellt ist. Mit dem Verkabelungsmodul 2 wird somit eine sichere und montage- bzw. demontagegerechte Verkabelungsmöglichkeit von Magnetventilen, die z. B. Pumpe Düseelemeten zugeordnet sind, geschaffen.
Liegt ein Defekt der elektrischen Leitungen 5;16;18;22 oder der Steckkontakte 27 vor, so können die Leitungen 5;16;18;22 auch durch Lösen der Stecker 13 von dem Aggregat 4 und Lösen der Mittel 23 von dem Schenkel 10b und anschließendem Herausziehen seperat ausgetauscht werden. Die Verkabelungsleiste 10 verbleibt währenddessen in dem Zylinderkopf 1. Dies ist insbesondere vorteilhaft, da die Verkabelungsleiste bewußt formstabil ausgebildet ist, und den Fall enger Raumverhältnisse im Motorraum nur schwer aus dem Zylinderkopf 1 herausgezogen werden kann. Nach dem Herausziehen der Leitungen 5;16;18;22 können die neuen Leitungen 5;16;18;22 in umgekehrter Reihenfolge der Arbeitsschritte wieder montiert werden. Dabei wird vorteilhaft ausgenutzt, daß die Leitungen 5;16;18;22 in sich bewegbar sind, und somit auch bei engen Raumverhältnissen in die Öffnung 9 eingeführt werden können.

### BEZUGSZEICHENLISTE

- 1: Bauteil, Zylinderkopf
- 2: Verkabelungsmodul
- 3: Büchse
- 4: Aggregat, Magnetventil
- 5: elektrische Leitungen
- 6: Gehäusewand
- 7: schmiermittelfreier Raum
- 8: teilweise mit Schmiermittel gefüllter Raum
- 9: Öffnung
- 10: Verkabelungsleiste
- 10a; 10b: Schenkel
- 10c; 10d: Ende
- 11: Mittel
- 12: Gehäusewand
- 13: Steckkontakt
- 14: Dichtung
- 15: Sicherungsmittel, Verrastung
- 16: Masseleitung
- 17: Mittel
- 18: Masseleitung (gemeinsame)
- 19: Mittel, Parallelverbinder
- 20: Ablauföffnungen
- 21: Steckeraufnahme
- 22: Stromversorgungsleitungen
- 23: Mittel
- 24: Materialschwächung
- 27: Steckkontakte
- 28: Kontakte
- 29: Kontakte
- 30: Steckergehäuse

## Patentansprüche

1. Verkabelungsmodul mit einer Verkabelungsleiste (10) und an der Verkabelungsleiste (10) angeordneten elektrischen Leitungen (5, 16, 22, 18) und einem mit zumindest einigen elektrischen Leitungen verbindbaren Zentralstecker (3), wobei die Verkabelungsleiste (10) formstabil ausgebildet ist und Mittel (23) vorgesehen sind, mit denen die elektrischen Leitungen (5, 16, 22, 18) an der Verkabelungsleiste (10) haltbar sind, und ein oder mehrere elektrische Leitungen (16, 22) von der Verkabelungsleiste (10) abzweigen, **dadurch gekennzeichnet, daß** weitere Mittel (17) vorgesehen sind, mit denen die abzweigenden Leitungen (16, 22) an der Verkabelungsleiste (10) haltbar sind.

2. Verkabelungsmodul nach Anspruch 1, **dadurch gekennzeichnet, daß** an der Verkabelungsleiste (10) Mittel (11) vorgesehen sind, mit denen die Verkabelungsleiste (10) an einem Bauteil (1) haltbar ist.

3. Verkabelungsmodul nach einem der vorangegangenen Ansprüche **dadurch gekennzeichnet, daß** entlang der Längsrichtung der Verkabelungsleiste (10) zwischen den Mitteln (23) Freiräume vorgesehen sind, durch die die abzweigenden elektrischen Leitungen (16, 22) herausführbar sind, daß die abzweigenden elektrischen Leitungen (16, 22) mit Steckern (13) verbunden sind, und daß die Stecker (13) an der Verkabelungsleiste (10) haltbar sind.

4. Verkabelungsmodul nach einem der Ansprüche 1 bis 3, **dadurch gekennzeichnet, daß** die abzweigenden Leitungen (16, 22) jeweils eine Stromversorgungsleitung (22) und eine Masseleitung (16) für ein elektrisch betätigbares Aggregat (4) sind.

5. Verkabelungsmodul nach Anspruch 4, **dadurch gekennzeichnet, daß** die Stromversorgungsleitungen (22) von einem Ende (10c) der Verkabelungsleiste (10) zu den Steckern (13) führbar sind, und von den Steckern (13) Masseleitungen (16) zu dem anderen Ende (10d) der Verkabelungsleiste (10) führbar sind.

6. Verkabelungsmodul nach Anspruch 5, **dadurch gekennzeichnet, daß** die Masseleitungen (16) der Stecker (13) an dem von dem Zentralstecker (3) abgewandten Ende (10d), der Verkabelungsleiste (10) elektrisch mit einer Masseleitung (18) verbunden sind, und die Masseleitung (18) mit dem Zentralstecker (3) elektrisch verbunden ist.

7. Verkabelungsmodul nach einem der vorangegangenen Ansprüche, **dadurch gekennzeichnet, daß** die Verkabelungsleiste (10) im Querschnitt U-förmig oder L-förmig ausgebildet ist, und die offene Seite mit den Mitteln (23) verschließbar ist.

8. Verkabelungsmodul nach Anspruch 7, **dadurch gekennzeichnet, daß** das Mittel (23) eine an dem einen Schenkel (10a) der Verkabelungsleiste (10) angeordnete Verlängerung ist, wobei zwischen der Verlängerung und dem Schenkel (10a) eine Materialschwächung (24) vorgesehen ist, die Verlängerung durch die Materialschwächung (24) zu dem Schenkel (10a) bewegbar ist, und durch Verbinden der Verlängerung (23) mit dem anderen Schenkel (10b) die offene Seite der Verkabelungsleiste (10) verschließbar ist.

9. Verkabelungsmodul nach einem der vorangegangenen Ansprüche, **dadurch gekennzeichnet, daß** der Stecker (13) aus einem Steckergehäuse (30) und wenigstens einem Steckkontakt (27) besteht und das Steckergehäuse (30) und/oder die Verkabelungsleiste (10) und/oder der Zentralstecker (3) im wesentlichen aus PA 46 bestehen.

10. Verkabelungsmodul nach einem der vorangegangenen Ansprüche, **dadurch gekennzeichnet, daß** der Stecker (13) einen Steckkontakt (27) und der Zentralstecker (3) zumindest einen Kontakt (29) aufweist und die elektrischen Leitungen (5, 16, 22, 18) und/oder der Steckkontakt (27) und/oder der Kontakt (29) aus Neusilber, vorzugsweise CuNi; 12 Zn 24 oder CuNi 18 Zn 20 oder aus Gold bestehen oder Beschichtungen aus den genannten Materialien aufweisen.

## Claims

1. Cabling module having a cabling strip (10) and electric lines (5, 16, 22, 18) arranged on the cabling strip (10), and having a central plug (3) which can be connected to at least a number of electric lines, the cabling strip (10) being of dimensionally stable design, and means (23) being provided which can be used to hold the electric lines (5, 16, 22, 18) on the cabling strip (10), and one or more electric lines (16, 22) branching off from the cabling strip (10), **characterized in that** further means (17) are provided which can be used to hold the branching-off lines (16, 22) on the cabling strip (10) .

2. Cabling module according to Claim 1, **characterized in that** means (11) are provided on the cabling strip (10) and can be used to hold the cabl ing strip (10) on a component (1).

3. Cabling module according to one of the preceding claims, **characterized in that** clearances through which the branching-off electric lines (16, 22) can be led out are provided along the longitudinal direction of the cabling strip (10) between the means (23), and **in that** branching-off electric lines (16, 22) are connected to plugs (13), and **in that** the plugs (13) can be held on the cabling strip (10).

4. Cabling module according to one of Claims 1 to 3, **characterized in that** the branching-off lines (16, 22) are in each case a power supply line (22) and an earth line (16) for an electrically actuable assembly (4).

5. Cabling module according to Claim 4, **characterized in that** the power supply lines (22) can be guided from one end (10c) of the cabling strip (10) to the plugs (13), and earth lines (16) can be guided from the plugs (13) to the other end (10d) of the cabling strip (10).

6. Cabling module according to Claim 5, **characterized in that** the earth lines (16) of the plugs (13) are electrically connected to an earth line (18) at that end (10d) of the cabling strip (10) which is remote from the central plug (3), and the earth line (18) is electrically connected to the central plug (3).

7. Cabling module according to one of the preceding claims, **characterized in that** the cabling strip (10) is of U-shaped or L-shaped design in cross section, and the open side can be closed by the means (23).

8. Cabling module according to Claim 7, **characterized in that** the means (23) is an extension which is arranged on the one limb (10a) of the cabling strip (10), a material weakening (24) being provided between the extension and the limb (10a), the extension being moveable by the material weakening (24) to the limb (10a), and the open side of the cabling strip (10) being closeable by connection of the extension (23) to the other limb (10b).

9. Cabling module according to one of the preceding claims, **characterized in that** the plug (13) comprises a plug housing (30) and at least one plug contact (27), and the plug housing (30) and/or the cabling strip (10) and/or central plug (3) essentially consisting of PA 46.

10. Cabling module according to one of the preceding claims, **characterized in that** the plug (13) has a plug contact (27) and the central plug (3) has at least one contact (29), and the electric lines (5, 16, 22, 18) and/or the plug contact (27) and/or the contact (29) consist of nickel silver, preferably CuNi 12 Zn 24 or CuNi 18 Zn 20 or of gold, or have coatings of the abovementioned materials.

## Revendications

1. Module de câblage avec une réglette de câblage (10) et des fils électriques (5, 16, 22, 18) agencés sur la réglette de câblage (10) et avec une fiche centrale (3) apte à être connectée à au moins quelques fils électriques, la réglette de câblage (10) étant conformée pour être indéformable et des moyens (23) étant prévus avec lesquels les fils électriques (5, 16, 22, 18) sont destinés à être retenus sur la réglette de câblage (10), un ou plusieurs fils électriques (16, 22) étant branchés sur la réglette de câblage (10), **caractérisé en ce que** sont prévus des moyens supplémentaires (17) permettant de retenir les fils de branchement (16, 22) sur la réglette de câbl age (10).

2. Module de câblage selon la revendication 1, **caractérisé en ce que** sur la réglette de câblage (10) sont prévus des moyens (11) permettant de retenir la réglette de câblage (10) sur une pièce (1).

3. Module de câblage selon l'une quelconque des revendications précédentes, **caractérisé en ce que** des espaces libres sont prévus entre les moyens (23) sur la longueur de la réglette de câblage (10), les fils électriques de branchement (16, 22) étant adaptés pour sortir par lesdits espaces libres, que les fils électriques de branchement (16, 22) sont raccordés à des fiches (13) et que les fiches (13) sont adaptées pour être retenues sur la réglette de câblage (10).

4. Module de câblage selon l'une quelconque des revendications 1 à 3, **caractérisé en ce que** les fils de branchement (16, 22) sont l'un un fil d'alimentation électrique (22) et l'autre un fil de masse (16) pour un groupe (4) adapté pour être commandé électriquement.

5. Module de câblage selon la revendication 4, **caractérisé en ce que** les fils d'alimentation électrique (22) sont adaptés pour être acheminés depuis une extrémité (10c) de la réglette de câblage (10) jusqu'aux fiches (13) et que des fils de masse (16) sont adaptés pour être acheminés depuis les fiches (13) jusqu'à l'autre extrémité (10d) de la réglette de câblage (10).

6. Module de câblage selon la revendication 5, **caractérisé en ce que** les fils de masse (16) des fiches (13) situées à l'extrémité (10d) de la réglette de câblage (10) qui est détournée de la fiche centrale (3) sont reliés à un fil de masse (18) et que le fil de masse (18) est relié électriquement à la fiche centrale (3).

7. Module de câblage selon l'une quelconque des revendications précédentes, **caractérisé en ce que** la réglette de câblage (10) est conformée pour avoir une section en U ou en L et que le côté ouvert est adapté pour être fermé avec les moyens (23) .

8. Module de câblage selon la revendication 7, **caractérisé en ce que** le moyen (23) est un prolongement situé sur une branche (10a) de la réglette de câblage (10), un affaiblissement de la matière (24) étant prévu entre le prolongement et la branche (10a), le prolongement étant apte à être déplacé vers la branche (10a) en passant par l'affaiblissement de matière (24) et le côté ouvert de la réglette de câblage (10) étant adapté pour être fermé en reliant le prolongement (23) à l'autre branche (10b).

9. Module de câblage selon l'une quelconque des revendications précédentes, **caractérisé en ce que** la fiche (13) est constituée d'un boîtier (30) de fiche et d'au moins un contact à fiches (27) et que le boîtier (30) de la fiche et/ou la réglette de câblage (10) et/ou la fiche centrale (3) sont réalisés sensiblement en polyamide 46.

10. Module de câblage selon l'une quelconque des revendications précédentes, **caractérisé en ce que** la fiche (13) comporte un contact à fiches (27) et que la fiche centrale (3) comporte au moins un contact (29) et que les fils électriques (5, 16, 22, 18) et/ou le contact à fiches (27) et/ou le contact (29) sont réalisés en maillechort, de préférence en CuNi ; 12 Zn 24 ou CuNi 18 Zn 20 ou en or ou bien comportent des revêtements réalisés dans les matériaux mentionnés.
